# EUROPEAN PATENT APPLICATION

(11) **EP 2 753 012 A1**
(43) Date of publication of application: **09.07.2014**
(21) Application number: 13150343.5
(22) Date of filing: 07.01.2013
(51) Int. Cl.: H04K 1/00, H04J 14/02, H04L 29/06, H04Q 11/00

(54) **Method and optical network to enhance security of data transmission in an optical access system.**

(71) Applicant: Nokia Solutions and Networks Oy, 02610 Espoo (FI)
(72) Inventor: Rohde, Harald, 81673 Munich (DE); Finkenzeller, Michael, 81373 München (DE)
(74) Representative: Lucke, Andreas

(57) **Abstract**

A method to enhance data security in a wavelength division multiplex passive optical network (WDMPON), transmitting upstream and downstream data signals in data frames between an OLT (1) and a plurality of ONUs (51, 52; ...) via optical channels (DC1, DC2, ...; UC1, UC2, ...) by using virtual security channels (VD1, VD2; UD1, UD2) for transmission of secure data signals, wherein the virtual security channels (VD1, VD2; UD1, UD2) use consecutively different optical channels (DC1, DC2, ...; UC1, UC2, ...) for the secure data transmission.

## Description

### FIELD OF THE INVENTION

The invention refers to a passive optical wavelength division multiplex system.

In passive fibre based access networks, so called 'Passive Optical Networks' (PON), transmission technology is limited mostly to one or two wavelengths for up- and downstream transmission. Within these wavelengths typically a time-division-multiplex scheme is used to allow multiple end-point users (ONUs) to share the medium.

A PON tree is a tree like topology of fibre connecting an 'Optical Line Terminal' (OLT) with end user terminals called 'Optical Network Units' (ONUs). The direction for the data from OLT to ONU is called downstream or downlink, from ONU to OLT is called upstream or uplink.

A new optical transmission technology combining wavelength division multiplex (WDM) and passive optical network (PON) technology is called Next-Generation-Optical-Access (NGOA), Ultra-Dense-Wavelength-Division-Multiplex (UDWDM). This wavelength division multiplex passive optical network (WDMPON) technology in itself is unique as it offers not only one wavelength shared by all PON users, but up to 1000 wavelengths which can also be individually routed to the end user ONUs.

### BACKGROUND OF THE INVENTION

PON trees based on wavelength splitters distribute only one downlink wavelength from the OLT to all connected ONUs. This is the same for all optical transmission technologies including UDWDM. For upstream transmission is performed using a second or even the same wavelength.

Hence, the standard PON system using one wavelength upstream, one wavelength downstream or foreseeable future technologies, which are not UDWDM based, makes it easy for attackers to "listen" to all data in the DL direction as well as in the UL direction. This allows an attacker to collect information which is actually sent to and from end-users. This is a data security risk. Usually this is addressed by applying encryption on higher layers e.g. the application layer itself.

It would be of advantage to make it more difficult for a potential attacker to listen to all the data at the physical /wavelength level, although the shared medium nature of a PON allows it in general.

### PRIOR ART

The European Patent Application 9300810.6 describes a method for transmitting data in a point to multipoint transmission system. The data signals are transmitted in a time division multiplex manner in the downstream and the upstream direction. The time slots in a downstream frame and in an upstream frame are assigned to the customers (ONUs). According to an encryption key the positions of the timeslots assigned to the customers are changed to prevent listening to a single data streams.

The method may be combined with other security methods like scrambling and encryption of the data streams.

In radio networks Frequency-Division-Multiplexing (FDM) is a known technology. To hop between different wavelengths is typically used to achieve various advantages like less distortion / better transmission quality or to avoid localisation. And to change between various wavelengths in a predefined scheme and therefore making it difficult for attackers to listen to the actual transmission is further a security measure.

### OBJECTS AND SUMMARY OF THE INVENTION

It is an object of the invention to provide a method and an optical network to improve data security in an optical network.

According to the present invention there is provided a method to enhance data security in a wavelength division multiplex passive optical network transmitting upstream and downstream data signals in data frames between an OLT (optical line terminal) (1) and a plurality of ONUs (optical network units) via optical channels, comprising the steps of
- transmitting secure data signals in downstream virtual security channels and/or in upstream virtual security channels between the OLT and the ONUs, whereat the virtual security channels are composed of consecutive optical channels having different wavelengths, and a sequence of optical channel combinations transmitted simultaneously is controlled by a security coding sequence; and
- retrieving the secure data signals by tuning to received optical channels of the security channels according to said security coding sequence.

If a sufficient great number (50 - 1000) of useable optical channels is available, it is practical impossible for an attacker to read the data signals transmitted via the virtual security channels.

In an embodiment of the invention the optical channels of the virtual security channels are chosen from the plurality of useable optical channels.

With a growing number of optical channels used for secure data transmission it becomes more improbable to follow the channel switching.

In an advantageously embodiment a random sequence is chosen for determining the sequence of possible combinations of useable optical channels which are transmitted simultaneously.

To avoid a latency time between transmitted data frames is advantageous that the optical channels of next transmitted and/or received group of data frames are chosen in advance. This may be done by tuning additional transmitters and/or receivers or their additional lasers at the OLT and/or the ONUs in advance.

To improve the security additional encipher methods are applied.

To complicate reading attacks additional transmission specific signal variations features are applied like transmission power, pulse forming, modulation parameters or polarisation.

According to the present invention there is provided an optical wavelength division multiplex passive optical network transmitting upstream and downstream data signals in data frames between an OLT (optical line terminal) and a plurality of ONUs (optical network units) via optical channels, wherein the system is arranged for carry out the features according to any of the method claims.

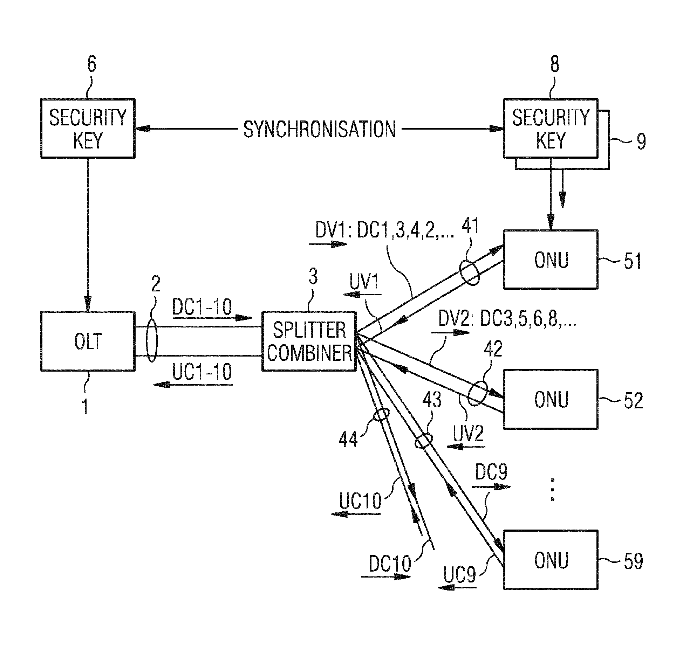

### BRIEF DESCRIPTION OF THE DRAWING

A FIG shows a basic block diagram of a WDM passive optical network according to the invention.

### DETAILED DESCRIPTION OF THE INVENTION

The drawing **FIG** illustrates a block diagram of a WDMPON (wavelength division multiplex passive optical network) for transmitting data signals with enhanced security. Only the functional elements relating to a basic embodiment of the invention are shown.

In the WDMPON an OLT (optical line terminal) 1 is connected via one fiber or two optical fibers 2, an optical splitter/combiner 3, and additional distributing fibers 41, 42, 43, 44, ... to a plurality of ONUs (optical network units or users) 51, 52, 59, .... Upstream and downstream data signals may be transmitted via one fiber using different wavelengths or via separate fibers. Additional connection fibers might be used for protection switching. In the standard WDMPON system each ONU is connected with the OLT via a downstream optical channel DC1, ..., DC10 and an upstream optical channel UC1, ..., UC10 determined by a specific wavelength and a bandwidth limited by an optical filter.

According to the invention a group 51, 52 of the ONUs or even a group comprising all ONUs is bidirectional connected with the OLT via 'virtual security channels' for transmitting 'secure data signals'. A virtual security channel uses consecutively a plurality of useable optical channels/wavelengths for data transmission - or with other words - varies its wavelength according the frequency scheme of the useable optical channels DC1 - DC8; UC1 - UC8.

The number combinations of optical channels used to compose security channels may be restricted to a subgroup of useable optical channels, but in a more advanced transmission system may comprehend up to all optical channels with are not used for standard connections with permanent channels/wavelengths. In the basic embodiment shown in the FIG optical downstream channels/wavelengths numbered DC1-DC8 are used to compose 2 downstream virtual security channels DV1, DV2, while the optical downstream channels DC9 and DC10 and upstream channels UC9, UC10 are used for standard downstream connections. Security upstream channels UV1, UV2 used for upstream connections may be composed in the same or a similar way.

The changeover to a new combination of optical channels has to be carried out synchronously for all downstream security channels and for all upstream security channels between successive data frames. In the downstream direction synchronism is not a problem at the OLT. In the upstream direction the different delays of the ONU connections have to be considered like in a traditional PON system, e.g. have to be compensated or a latency time between data frames is necessary.

As the change of the wavelengths takes some time, tunable lasers may be used to change the wavelengths of a virtual security channel.

To overcome time restriction, there are two possibilities:
- Either the data has to be buffered and the latency time increases slightly. Buffering of data is a widely used technology, as well in today's TDM networks, and this does not disturb "lifestream" data such as video.
- For reduced latency time and jitter, a "make before break" scheme can be implemented. Additional lasers in transmitters may be used, which are tuned to the frequencies of the following frames before the hop, and the switch over happens almost seamlessly.
On the receiving sides the receivers have to be tuned according to the wavelengths of the received optical channels belonging to the security channels. Additional lasers or even additional receivers may be tuned in advance to the frequencies of the following frame. In this case, the ONU/OLT has two transceivers (for each connection) and while the data transmission is active through one transceiver, the respective other transceiver tunes to a next foreseen wavelength, before the actual switch takes place, and is then ready for a quick lock-in into the new wavelength when the switch happens.

The changeover may happen after a single transmission frame or after a plurality of frames. Even the number of frames can vary, and even vary differently for different security channels.

Depending on a random generator, channel jumps per second, the numbers of security channels and useable optical channels, a 'security coding sequence' is repeated after years and can be extended easily.

The 'security coding sequence' determines the consecutive groups of possible optical 'channel combinations' - in the example DC 1,3; 3,5; 4,6; 2,8; ... - and this 'channel combination sequence' is advantageously determined by a pseudo-random sequence defined by a security key. The duration of a channel combination corresponds to a data frame or a plurality of data frames. The changeover of optical downstream channels and optical upstream channels and even the combination of the optical channels may be controlled by the same pseudo-random 'security coding sequence' or by different pseudo-random sequences defined by the security key.

The random generator 6 at the OLT and the random generators 8, 9, ... at the ONUs 51, 52, ... are synchronized by a kwon distributed synchronisation mechanism. Synchronisation information controlling the synchronism between the random generators at the OLT and the ONUs is also transmitted via the optical fibers 2. Of course, the security data channels are decoded by applying the same security coding sequence.

A potential attacker who actually is able to physically listen to all channels on a WDMPON, by the nature of being a shared medium, cannot follow the data transmission between OLT to ONU by just listening to a specific channel or to all channels for long enough until e.g. the application specific security (encryption) can be broken.

By changing additional channel specific parameters like amplitude and polarisation it can be practically impossible for an attacker to tune to a given wavelength before the next pseudo-random selected wavelength is activated.

So instead of listening to a single channel and recording it for later decryption, the attacker has to record up to 1000 channels, thus multiplying the effort to eavesdrop by a factor of 1000.

In addition, the secure data signal transmitted in a virtual security channel can be encrypted in a common method.

The present invention is not limited to the details of the above described principles. The scope of the invention is defined by the appended claims and all changes and modifications as fall within the equivalents of the scope of the claims are therefore to be embraced by the invention.

### REFERENCE SIGNS

| | |
|---|---|
| 1 | optical line terminal OLT |
| 2 | optical fiber |
| 3 | splitter/combiner |
| 41, 42, 42 | distributing fiber |
| 51, 52 | ONUs for secure data transmission |
| 59 | ONU for standard transmission |
| 6, 8 | random generator |

## Claims

1. A method to enhance data security in a wavelength division multiplex passive optical network transmitting upstream and downstream data signals in data frames between an OLT (optical line terminal) (1) and a plurality of ONUs (optical network units) (51, 52; ...) via optical channels (DC1 - DC10; UC1 - UC10), comprising the steps of
- transmitting secure data signals in downstream virtual security channels (DV1, DV2) and/or in upstream virtual security channels (UV1, UV2) between the OLT (1) and the ONUs (51, 52), whereat the virtual security channels (DV1, DV2; UV1, UV2) are composed of consecutive optical channels (DC1, DC2, DC3, ...; UC1, UC2, UC3, ...) having different wavelengths, and a channel combination sequence (DC1,DC3; DC3,DC5; DC4,DC6; ...) of simultaneously transmitted optical channels is controlled by a security coding sequence; and
- retrieving the secure data signals by tuning to received optical channels (DC1, DC3, DC4, ...; DC3, DC5, DC6, ...) of the security channels (DV1, DV2) according to said security coding sequence.

2. A method according to claim 2, wherein the optical channels of the virtual security channels (DV1, DV2; UV1, UV2) are chosen from a plurality of useable optical channels (DC1-DC8; UC1-UC8).

3. A method according to one of the preceding claims, wherein
a random sequence is chosen for determining the security coding sequence and therefore the sequence of possible optical channel combinations of useable optical channels (DC1-DC8; UC1-UC8).

4. A method according to one of the preceding claims, wherein
the optical channels (DC1-DC8; UC1-UC8) of next transmitted and/or received data frames are chosen in advance according to the security coding sequence.

5. A method according to claim 4, wherein
additional transmitters and/or receivers or their additional lasers at the OLT (1) and/or at the ONUs (51, 52) are tuned in advance.

6. A method according to one of the preceding claims, wherein
additional encipher methods are applied.

7. A method according to one of the preceding claims, wherein additional transmission specific signal variations features are applied like transmission power, pulse forming, modulation parameters or polarisation.

8. An optical wavelength division multiplex passive optical network transmitting upstream and downstream data signals in data frames between an OLT (optical line terminal) (1) and a plurality of ONUs (optical network units) (51, 52; ...) via optical channels (DC1-10; UC1-10), wherein
the system is arranged for carry out the features according to any of the method claims 1 - 7.
